# EUROPÄISCHE PATENTANMELDUNG

(11) **EP 3 808 470 A1**
(43) Veröffentlichungstag der Anmeldung: **21.04.2021**
(21) Anmeldenummer: 20184626.8
(22) Anmeldetag: 08.07.2020
(51) Int. Cl.: B21D 28/00, B21D 37/04, B21F 1/00, B30B 15/00, F16C 7/06

(54) **EINSTELLBARE KOPPEL FÜR WERKZEUGE DER STANZ- UND UMFORMTECHNIK**

(30) Priorität: 14.10.2019 DE 102019215750
(71) Anmelder: Otto Bihler Maschinenfabrik GmbH & Co. KG, 87642 Halblech/Füssen (DE)
(72) Erfinder: WALTER, Marc, 87642 Halblech (DE)
(74) Vertreter: Weickmann & Weickmann PartmbB

(57) **Zusammenfassung**

Die Erfindung betrifft eine Koppel (10) für Werkzeuge der Stanz- und Um-formtechnik zum Verbinden eines Stempels mit einem Antriebsstössel, so dass ein Kraftübertrag von dem Antriebsstössel auf den Stempel erfolgen kann, so dass der Stempel einen Stanz- und/oder Umformprozess an einem Werkstück bewirkt, wobei die Koppel (10) ein Koppelstösselelement (12) und ein Koppelstempelelement (14) umfasst, die lösbar miteinander verbindbar sind und in einem teilgelösten Zustand noch verbunden aber gegeneinander beweglich sind.

## Beschreibung

Die vorliegende Erfindung betrifft eine Koppel für Werkzeuge der Stanz- und Umformtechnik zum Verbinden eines Stempels mit einem Antriebsstössel, so dass ein Kraftübertrag von dem Antriebsstössel auf den Stempel erfolgen kann, so dass der Stempel einen Stanz- und/oder Umformprozess an einem Werkstück bewirkt.

Bei einem solchen Stanz- und/oder Umformprozess muss der Stempel über eine genau einzustellende Weglänge auf das Werkstück einwirken (auch als Eintauchtiefe bezeichnet) bzw. der Totpunkt, also der Punkt an dem die Bewegung des Stempels nicht mehr weiter geht muss passend sein, damit das Werkstück die gewünschte Form erhält.

Hierfür werden üblicherweise Unterlegplatten (auch als Abstimmplatten bezeichnet) zwischen Stössel und Koppel platziert, wenigstens um eine Feineinstellung der Eintauchtiefe durchzuführen.

Dies ist jedoch arbeitsaufwendig und schwierig, da viele Bauteile bewegt, betätigt bzw. beeinflusst werden müssen und die Stelle schlecht zugänglich ist.

Somit stellt sich die Aufgabe, eine Vorrichtung oder ein Verfahren anzugeben, die eine zuverlässige und einfache Feineinstellung der Eintauchtiefe ermöglicht.

Diese Aufgabe wird gelöst durch eine Koppel gemäß Anspruch 1 und/oder durch ein Set nach Anspruch 12 und/oder durch eine Stanz- und/oder Umformmaschine nach Anspruch 13 und/oder durch ein Verfahren nach Anspruch 14. Vorteilhafte Ausgestaltungen sind Gegenstand der abhängigen Ansprüche.

Eine erfindungsgemäße Koppel ist gekennzeichnet dadurch, dass die Koppel ein Koppelstösselelement und ein Koppelstempelelement umfasst, die lösbar miteinander verbindbar sind und in einem teilgelösten Zustand noch verbunden aber gegeneinander beweglich sind.

Die Koppel ist aufgrund Ihrer Position meist leicht zugänglich und im teilgelösten Zustand lassen sich Koppelstösselelement und Koppelstempelelement soweit verschieben und passende Abstandsfolien oder ähnliches anordnen, so dass eine Feineinstellung der Eintauchtiefe leicht erfolgen kann.

Denn eine Vergrößerung oder Verkleinerung der Koppellänge zwischen Antriebsstössel und Stempel bzw. eine solche Längenänderung ändert unmittelbar die Eintauchtiefe.

Hierbei bedeutet "teilgelöster Zustand", dass Koppelstösselelement und Koppelstempelelement zwar noch in irgendeiner Weise physisch miteinander verbunden sind, aber ihre relative Position zueinander in gewissem Maße bzw. mit gewissem Spiel beweglich ist.

Das Ausmaß der relativen Beweglichkeit beträgt dabei bevorzugt weniger als 10 cm, besonders bevorzugt weniger als 1 cm. Alternativ oder zusätzlich beträgt das Ausmaß weniger als 50%, bevorzugt weniger als 20%, besonders bevorzugt weniger als 10% der Gesamtlänge der Koppel, des Koppelstösselelements und/oder des Koppelstempelelements.

Bevorzugt weisen Koppelstösselelement und Koppelstempelelement jeweils mindestens eine Klemmöffnung auf und sind durch eine Klemmschraube und bevorzugt eine Klemmmutter verbunden, wobei wenigstens die Klemmschraube durch jeweils mindestens eine der Klemmöffnungen von Koppelstösselelement und Koppelstempelelement geführt ist und/oder sich durch diese erstreckt.

Damit können durch Betätigen der Klemmschraube Koppelstösselelement und Koppelstempelelement mittels Klemmkraft in einen verbundenen Zustand gebracht werden, in dem keine Relativbewegung mehr möglich ist. Durch Lösen der Klemmschraube sinkt die Klemmkraft, womit der teilgelöste Zustand hergestellt wird.

Die Verwendung einer Klemmmutter ist bevorzugt, da alternativ eine der Klemmöffnungen mit einem Schraubgewinde versehen werden müsste. An den Klemmöffnungen können jedoch große Kräfte auftreten, weshalb ein solches Gewinde schnell abgenutzt sein könnte. Dann müsste die ganze Koppel oder wenigstens Koppelstösselelement oder Koppelstempelelement (je nachdem welches das Schraubgewinde an der Klemmöffnung aufweist) ausgetauscht werden.

Hingegen kann die Klemmmutter leicht ausgetauscht werden.

Bevorzugt weisen mindestens eine Klemmöffnung einerseits und Klemmschraube und Klemmmutter andererseits zueinander komplementäre Abschrägungen auf, bevorzugt so dass sich bei lösender Betätigung der Klemmschraube aus einem verbundenen Zustand der teilgelöste Zustand ergibt, in dem beide mit Spiel entsprechend einem Ausmaß der Abschrägungen gegeneinander beweglich sind, und erst weitere lösende Betätigung der Klemmschraube zu einem gelösten Zustand und/oder zu einer Trennung von Klemmschraube und Klemmmutter von der Koppel führt.

Dadurch lässt sich der teilgelöste Zustand zuverlässig und schnell erreichen. Ferner bestimmt das Ausmaß der Betätigung der Klemmschraube auch das Ausmaß der aktuellen relativen Beweglichkeit von Koppelstösselelement und Koppelstempelelement zueinander.

Damit lässt sich das Spiel zwischen den beiden von 0 bis zu einem Spiel entsprechend der Größe/Ausdehnung der Abschrägungen frei mittels der Klemmschraube einstellen. Dies beschleunigt das Feinjustieren, denn eine Einstellung der Länge der Koppel auf die genau für einen Einsatz von Abstandsfolien oder ähnlichem erforderliche Gesamtlänge ist schnell und präzise möglich.

Grundsätzlich ist es möglich, die Abschrägungen sowohl an der oder den Klemmöffnungen des Koppelstösselelements als auch des Koppelstempelelements sowie bei beiden vorzusehen.

Besonders bevorzugt umfassen Koppelstösselelement, Koppelstempelelement, Klemmschraube und/oder Klemmmutter Markierungen, Skalierungen und/oder andere Symbole, anhand derer ein Benutzer erkennen kann, welche Drehung der Klemmschraube für welche Längenänderung der Koppel sinnvoll ist.

Bevorzugt umfasst das Koppelstösselelement oder das Koppelstempelelement eine Einlegeausnehmung, bevorzugt das Koppelstösselelement, deren Inhalt, insbesondere Abstandsfolien, in einem verbundenen Zustand von Koppelstösselelement und/oder Koppelstempelelement zwischen diesen geklemmt ist und einen Abstand zwischen diesen vergrößert.

Dadurch lassen sich präzise ein Inhalt also Elemente zur Längenänderung der Koppel ortssicher positionieren, so dass diese beim Herstellen eines verbundenen Zustands nicht verrutschen und deshalb nicht die gewünschte Längenänderung erzielt wird.

Bevorzugt umfassen Koppelstösselelement und/oder Koppelstempelelement eine Zugangsöffnung, bevorzugt das Koppelstempelelement, durch die die Einlegeausnehmung wenigstens im teilgelösten Zustand zugänglich ist. Dies beschleunigt das Einbringen von entsprechenden die Länge der Koppel vergrößernden Elementen erheblich. Dies insbesondere in Verbindung mit der Nutzung von Klemmschraube und Klemmmutter mit Abschrägungen.

Denn dann muss ein Nutzer nur die Klemmschraube ausreichend betätigen und es ergibt sich unmittelbar das notwendige Spiel zwischen Koppelstösselelement und Koppelstempelelement für die Längenänderung und es können unmittelbar beispielsweise Abstandsfolien in die Einlegeausnehmung eingelegt werden, die dann bei erneutem Anziehen der Klemmschraube genau die gewünschte Längenänderung der Koppel verursachen, definieren und/oder sicherstellen.

Bevorzugt umfasst die Koppel mindestens ein Anschlagelement, welches im teilgelösten Zustand von Koppelstösselelement und Koppelstempelelement trennbar ist und in einem verbundenen Zustand durch und zwischen Koppelstösselelement und Koppelstempelelement geklemmt ist und einen Abstand zwischen diesen bestimmt und/oder mit bestimmt und/oder beeinflusst.

Ein solches Anschlagelement ist aufgrund der Trennbarkeit leicht durch ein anderes Anschlagelement mit anderer Größe ersetzbar, womit sich leicht eine Änderung der Gesamtlänge der Koppel einstellen lässt und somit die Eintauchtiefe einstellen lässt.

Besonders bevorzugt umfasst die erfindungsgemäße Koppel mehrere Anschlagelemente verschiedener Größe, die jeweils markiert sind hinsichtlich der sich durch Einsetzen des jeweiligen Anschlagelements ergebenden Eintauchtiefe und/oder Änderung der Eintauchtiefe, wobei meist jeweils nur ein Anschlagelement in der Koppel angeordnet ist.

Besonders bevorzugt ist in Ausführungsformen mit Einlegeausnehmung das Anschlagelement im verbundenen Zustand in Reihe geklemmt mit der Einlegeausnehmung, wobei bevorzugt das Anschlagelement in Ausführungsformen mit Zugangsöffnung durch die Zugangsöffnung im teilgelösten Zustand entnehmbar und durch ein weiteres Anschlagelement ersetzbar ist.

Dadurch kann je nach erforderlicher Längenänderung sowohl ein anderes Anschlagelement als auch Einlagemittel wie Abstandsfolien leicht genutzt werden, was eine präzisere Feineinstellung beschleunigt.

"In Reihe geklemmt" bedeutet hier, dass Abstandselement und Einlegeausnehmung so zueinander angeordnet sind, dass in einem verbunden Zustand das Anschlagelement eine Kraft direkt auf die Einlegeausnehmung und/oder den darin befindlichen Inhalt bzw. die Einlegemittel bzw. die Abstandsfolien ausübt, welche in der Einlegeausnehmung platziert sind.

Schutz wird ebenfalls beansprucht für ein Set aus einer oder mehreren erfindungsgemäßen Koppeln mit einem oder mehreren Anschlagelementen, insbesondere ausgebildet im Sinne der zuvor genannten Merkmale.

Bevorzugt umfasst die Koppel eine Fixierschraube zum Fixieren und/oder Begrenzen einer Position des Anschlagelements relativ zu Koppelstösselelement und/oder Koppelstempelelement. Hierfür können Koppelstösselelement und/oder Koppelstempelelement ein Schraubgewinde aufweisen.

Dies ist vorteilhaft, da dann bereits vor dem Anziehen der Klemmschraube das Anschlagelement und damit bevorzugt auch Inhalt bzw. Einlegemittel bzw. Abstandsfolie in der Einlegeausnehmung vorfixiert und/oder wenigstens in der Bewegung begrenzt sind und dadurch weniger leicht beim Anziehen der Klemmschraube verrutschen und/oder weniger leicht falsch platziert werden.

Bevorzugt umfassen Koppelstösselelement und Koppelstempelelement komplementär zueinander mindestens einen Führungsvorsprung und eine Führungsnut, , bevorzugt jeweils mindestens zwei zueinander orthogonal orientierte, so dass Koppelstösselelement und Koppelstempelelement im teilgelösten Zustand bei der Bewegung zueinander geführt sind, bevorzugt so dass nur eine Bewegung entlang einer Richtung erfolgen kann, die einer Verbindung von einem Stempel zu einem Antriebsstössel entspricht, wenn die Koppel in einem Werkzeug der Stanz- und Umformtechnik zum Verbinden des Stempels mit dem Antriebsstössel eingesetzt ist.

Dies stellt sicher, dass sich nur in der Raumrichtung die Länge der Koppel ändert, in der es für die Feineinstellung der Eintauchtiefe erforderlich ist, und vermeidet insbesondere Rotationsbewegungen von Koppelstösselelement und Koppelstempelelement zueinander während der Feineinstellung der Gesamtlänge der Koppel.

Bevorzugt sind Koppelstösselelement und Koppelstempelelement und/oder Stempel und Antriebsstössel gegeneinander durch mindestens eine Feder in den teilgelösten Zustand der Koppel vorgespannt.

Dadurch ergibt sich automatisch der teilgelöste Zustand, wenn die den verbundenen Zustand bewirkenden Mittel betätigt bzw. gelöst werden.

Besonders vorteilhaft ist dies in Kombination mit dem Merkmal der Klemmschraube, insbesondere mit Abschrägungen, denn dann entspricht die aktuelle relative Position von Koppelstösselelement und Koppelstempelelement meist genau dem, was durch das Ausmaß der Betätigung der Klemmschraube vorgegeben ist.

Dadurch kann durch eine reine Betätigung der Klemmschraube präzise eine gewünschte Länge der Koppel eingestellt werden und als unmittelbar nächsten Arbeitsschritt können Elemente vorgesehen werden, wie beispielsweise in eine Einlegeaufnahme eingelegte Abstandsfolien und/oder ein Anschlagelement, die die gewünschte Länge für den verbundenen Zustand sicher stellen, woraufhin die Feinjustierung abgeschlossen wird durch einfaches Betätigen bzw. Anziehen der Klemmschraube bis der verbundenen Zustand erreicht ist.

Bevorzugt umfassen Koppelstösselelement und Koppelstempelelement Kopplungsmittel zur Verbindung mit Stössel und/oder Stempel. Dadurch ist ein zuverlässiger Kraftübertrag von dem Antriebsstössel auf den Stempel gewährleistet.

Eine erfindungsgemäße Stanz- und/oder Umformmaschine umfasst mindestens einen Stempel und mindestens einen Antriebsstössel, wobei mindestens eine erfindungsgemäße Koppel zwischen dem mindestens einen Stempel und dem mindestens einen Antriebsstössel angeordnet ist. Bevorzugt sind zwischen einem Stempel und einem Antriebsstössel der erfindungsgemäßen Stanz- und/oder Umformmaschine mehrere erfindungsgemäße Koppeln angeordnet.

Alternativ oder zusätzlich umfasst eine erfindungsgemäße Stanz- und/oder Umformmaschine mindestens ein erfindungsgemäßes Set.

Ein erfindungsgemäßes Verfahren zum Verstellen eines Abstandes zwischen einem Stempel und einem Antriebsstössel nutzt eine erfindungsgemäße Koppel und/oder ein erfindungsgemäßes Set und/oder eine erfindungsgemäße Stanz- und/oder Umformmaschine und umfasst wenigstens einen, bevorzugt mehrere und besonders bevorzugt alle der Schritte oder alle der Schritte bis auf c) und g):
a) Lösende Betätigung einer Klemmschraube bis der teilgelöste Zustand erreicht ist;
b) Bewegen von Koppelstösselelement und Koppelstempelelement bis ein gewünschter Abstand zwischen Koppelstösselelement und Koppelstempelelement und/oder eine gewünschte Gesamtgröße der Koppel und/oder ein gewünschter Abstand zwischen Stempel und Antriebsstössel erreicht ist;
c) Lösende Betätigung einer Fixierschraube;
d) Trennen eines Anschlagelements von Koppelstösselelement und/oder Koppelstempelelement, bevorzugt durch eine Zugangsöffnung;
e) Bereitstellen von Inhalt, insbesondere Abstandsfolien, in dem teilgelösten Zustand von solcher Menge, solchem Umfang, solcher Anzahl und/oder solcher Dicke in einer Einlegeausnehmung, wie dies einem gewünschten Abstand zwischen Koppelstösselelement und Koppelstempelelement und/oder einer gewünschten Gesamtgröße der Koppel und/oder einem gewünschten Abstand zwischen Stempel und Antriebsstößel entspricht;
f) Einbringen des Anschlagelements oder eines auf einen gewünschten Abstand ausgelegten Anschlagelements in Koppelstösselelement und/oder Koppelstempelelement, bevorzugt durch eine Zugangsöffnung;
g) Fixierende Betätigung einer Fixierschraube; und/oder
h) Fixierende Betätigung einer Klemmschraube,
wobei bevorzugt die Ausführung in alphabetischer Reihenfolge erfolgt, wobei besonders bevorzugt die Schritte c) und g) selten, sehr selten und/oder nicht ausgeführt werden.

Das erfindungsgemäße Verfahren erlaubt eine einfache und schnelle Feineinstellung der Eintauchtiefe.

Nachfolgend wird ein Ausführungsbeispiel der Erfindung anhand der beiliegenden Figuren erläutert.
- Figur 1: zeigt eine erfindungsgemäße Koppel in einer perspektivischen Ansicht.
- Figur 2: zeigt die erfindungsgemäße Koppel aus Figur 1 in einer perspektivischen Ansicht in einem zerlegten Zustand, wobei durch gestrichelte Linien Schraubverbindungen beim Zusammensetzen angedeutet sind.
- Figur 3: zeigt die erfindungsgemäße Koppel aus Figur 1 in einer seitlichen Ansicht.
- Figur 4: zeigt die erfindungsgemäße Koppel aus Figur 1 in einer seitlichen Ansicht orthogonal zur seitlichen Ansicht aus Figur 3.
- Figur 5: zeigt die erfindungsgemäße Koppel aus Figur 1 in einer Schnittansicht entsprechend der Linie A-A aus Figur 3.

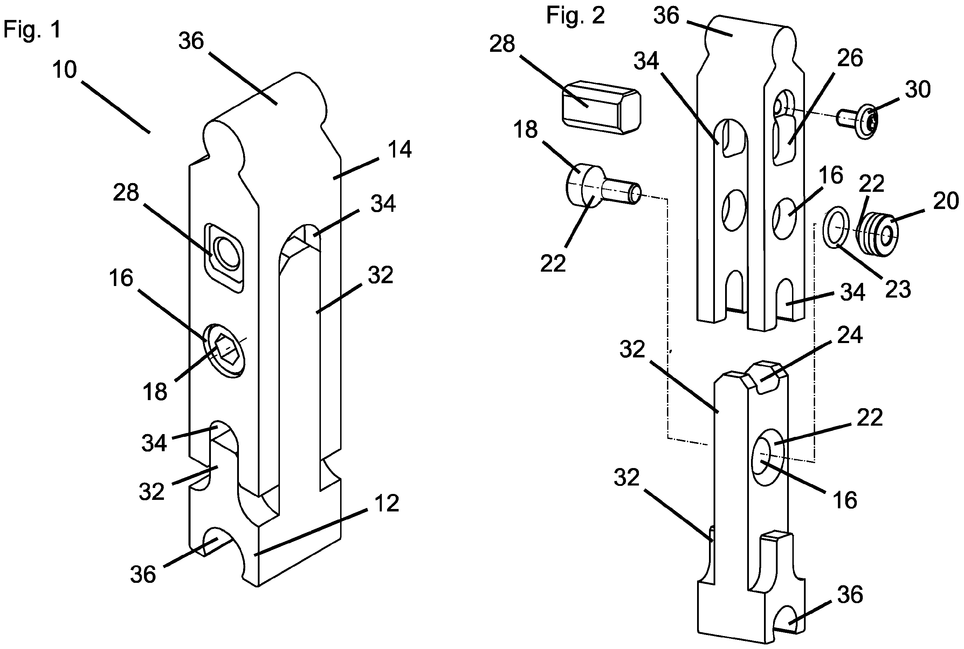

Figur 1 zeigt eine erfindungsgemäße Koppel 10, die im Wesentlichen ein Koppelstösselelement 12 und ein Koppelstempelelement 14 umfasst. Figur 2 zeigt die erfindungsgemäße Koppel 10 in einem zerlegten Zustand.

Koppelstösselelement 12 und Koppelstempelelement 14 weisen jeweils beidseitig Klemmöffnungen 16 auf, durch die Koppelstösselelement 12 und Koppelstempelelement 14 mittels einer Klemmschraube 18 und einer Klemmmutter 20 klemmend fest miteinander verbindbar sind, so dass eine relative Bewegung ausgeschlossen ist. Um in Zuständen, in denen Klemmschraube 18 und Klemmmutter 20 relativ locker sitzen ein Mitdrehen der Klemmmutter 20 beim Betätigen der Klemmschraube 18 zu verhindern, kann beispielsweise der O-Ring 23 als Verdrehsicherung für die Klemmmutter 20 angeordnet sein.

Wird die Klemmschraube 18 gelockert, können Koppelstösselelement 12 und Koppelstempelelement 14 um ein Spiel bestimmt durch Umfang/Größe der Abschrägungen 22 an einigen Klemmöffnungen 16 sowie an der Klemmschraube 18 und der Klemmmutter 20 relativ zueinander bewegt werden, sind aber durch Klemmschraube 18 und Klemmmutter 20 immer noch miteinander verbunden.

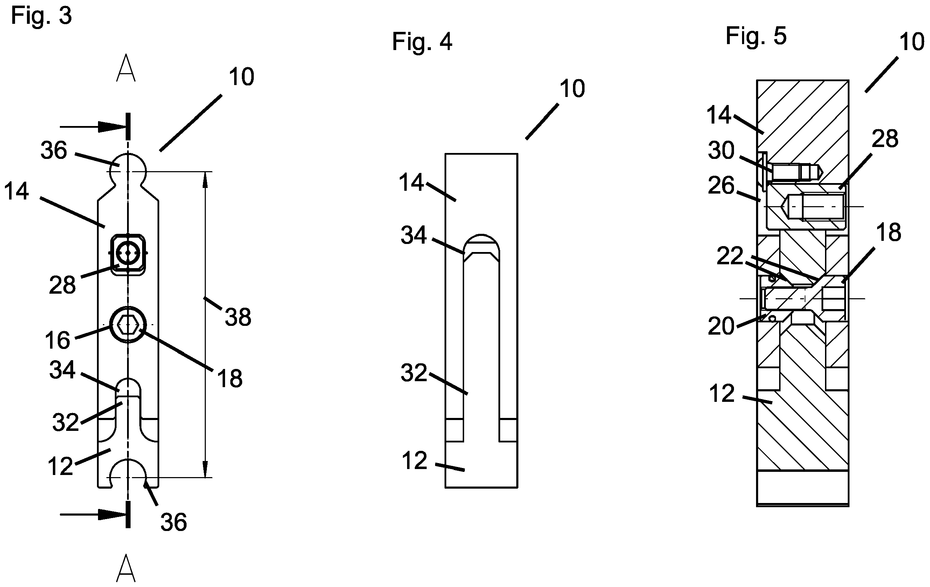

Wie in Figuren 3 und 4 gezeigt ist diese relative Bewegung durch Führungsvorsprünge 32 und Führungsnuten 34 von Koppelstösselelement 12 bzw. Koppelstempelelement 14 geführt und zwar so, dass die Bewegung nur in einer Richtung erfolgen kann, die von Kopplungsmitteln 36 am Koppelstösselelement 12 zu Kopplungsmitteln 36 am Koppelstempelelement 14 verläuft. Dadurch ist sichergestellt, dass die relative Bewegung präzise genau dem Zweck dient, den Abstand zwischen an die Koppel 10 angekoppelte Stempel und Antriebsstössel zu verändern, um eine Eintauchtiefe präzise einzustellen.

Wie aus Figur 2 und 5 ersichtlich, dienen ein Anschlagelement 28 und eine Einlegeausnehmung 24 zum Einstellen der gewünschten effektiven Gesamtlänge bzw. -größe 38 der Koppel 10. Diese effektive Gesamtlänge 38 muss allerdings nicht die Gesamtlänge der Koppel 10 sein, sondern kann auch die Länge bzw. der Abstand zwischen einer Mitte oder einer Ankopplungsachse der Kopplungsmittel 36 sein, wie in Figur 3 gezeigt.

Ist aus dem in Fig. 1 gezeigten verbundenen Zustand heraus eine andere effektive Gesamtlänge 36 einzustellen, werden als erstes Klemmschraube 18 und/oder Klemmmutter 20 gelockert. Dann können je nach Grad der Lockerung Koppelstösselelement 12 und Koppelstempelelement 14 relativ zueinander bewegt werden, maximal um die bezogen auf Fig. 5 senkrechte Höhe der Anschrägungen 22.

Unter Umständen wird davor oder danach eine das Anschlagelement 28 in einer Zugangsöffnung 26 fixierende und/oder dessen Position begrenzende Fixierschraube 30 gelöst, so dass das Anschlagelement 28 bei Bedarf aus der Zugangsöffnung 26 entnommen werden kann. Falls das Anschlagelement 28 aus der gegenüberliegenden Zugangsöffnung 26 entnommen wird, kann die Fixierschraube auch in Position bleiben.

Bevorzugt dient die Fixierschraube 30 dazu, dass das Anschlagelement 28 durch die der Fixierschraube 30 gegenüberliegende Zugangsöffnung 26 eingeschoben werden kann ohne Risiko eines Herausrutschens durch die gegenüberliegende Zugangsöffnung 26. Gleichzeitig kann die Fixierschraube 30 auch entfernt werden, wenn doch die andere Zugangsöffnung 26 genutzt werden muss.

Koppelstösselelement 12 und Koppelstempelelement 14 werden nun soweit zueinander bewegt, dass sich eine erwünschte geänderte effektive Gesamtlänge 38 ergibt und/oder dass die Einlegeausnehmung 24 durch die Zugangsöffnung 26 zugänglich ist.

Dann wird ein Anschlagelement 28 anderer senkrechter Höhe (bezogen auf Fig. 5) eingesetzt und/oder es werden Abstandsfolien in die Einlegeausnehmung 24 eingelegt oder von dort entnommen.

Diese Änderung bestimmt die sich anschließend ergebende effektive Gesamtlänge 38.

Dies ist insbesondere ersichtlich an Figur 5 und Figur 1. Wird ein dickeres Anschlagelement 28 eingesetzt und/oder mehr Abstandsfolien in der Einlegeausnehmung 24 platziert, kann das obere Ende des Koppelstösselelements 12 nicht mehr so nah an die Kopplungsmittel 36 des Koppelstempelelements 14 herangeführt werden wie zuvor. Durch Festziehen Klemmschraube 18 und Klemmmutter 20 wird die Position fixiert, wobei ggf. zuvor noch die Fixierschraube 30 festgezogen werden muss, wenn diese gelöst worden ist.

Die effektive Gesamtlänge 38 ist um die Dicke der zusätzlichen Abstandsfolien bzw. die Dickendifferenz von vorherigem zu aktuellem Anschlagelements 28 vergrößert (bzw. um die aufgrund der Klemmwirkung resultierende Dicke, da ggf. Material von Abstandsfolien und/oder Anschlagelement 28 leicht nachgibt).

Womit die Eintauchtiefe um einen definierten Betrag vergrößert ist. Hierfür sind lediglich das Lösen von ein oder zwei leicht zugänglichen Schrauben und das Herausnehmen/Einsetzen von Anschlagelementen 28 und/oder Abstandsfolien durch die leicht zugängliche Zugangsöffnung 26 erforderlich.

Eine Verkleinerung der Eintauchtiefe erfolgt in gleicher Weise einfach und schnell durch Einsetzen von einem bezogen auf die Senkrechte in Figur 5 dünnerem Anschlagelement 28 und/oder durch die Entnahme von Abstandsfolien aus der Einlegeausnehmung 24.

Dabei ist durch die Führungsvorsprünge 32 und Führungsnuten 34 sichergestellt, dass die Änderung der effektiven Gesamtlänge in keinem Fall zu einer Schrägstellung der Koppel 10 und damit von Stempel und/oder Antriebsstössel führt und sich rein eine Vergrößerung oder Verkleinerung der effektiven Gesamtlänge 38 ergibt. Dies realisiert eine einfache, zuverlässige und präzise Feineinstellung der Eintauchtiefe.

Wie in Figur 1 gezeigt umfasst die Klemmschraube 18 bevorzugt ein Innengewinde, um die Betätigung der Klemmschraube 18 zu erleichtern.

## Patentansprüche

1. Koppel (10) für Werkzeuge der Stanz- und Umformtechnik zum Verbinden eines Stempels mit einem Antriebsstössel, so dass ein Kraftübertrag von dem Antriebsstössel auf den Stempel erfolgen kann, so dass der Stempel einen Stanz- und/oder Umformprozess an einem Werkstück bewirkt, **dadurch gekennzeichnet, dass**
die Koppel (10) ein Koppelstösselelement (12) und ein Koppelstempelelement (14) umfasst, die lösbar miteinander verbindbar sind und in einem teilgelösten Zustand noch verbunden aber gegeneinander beweglich sind.

2. Koppel (10) nach Anspruch 1, **dadurch gekennzeichnet, dass** Koppelstösselelement (12) und Koppelstempelelement (14) jeweils eine Klemmöffnung (16) aufweisen und durch eine Klemmschraube (18) und eine Klemmmutter verbunden sind, wobei wenigstens die Klemmschraube (18) durch jeweils mindestens eine der Klemmöffnungen (16) von Koppelstösselelement (12) und Koppelstempelelement (14) geführt ist und/oder sich durch diese erstreckt.

3. Koppel (10) nach Anspruch 2, **dadurch gekennzeichnet, dass** mindestens eine Klemmöffnung (16) einerseits und Klemmschraube (18) und bevorzugt Klemmmutter (20) andererseits zueinander komplementäre Abschrägungen (22) aufweisen, bevorzugt so dass sich bei lösender Betätigung der Klemmschraube (18) aus einem verbundenen Zustand der teilgelöste Zustand ergibt, in dem beide mit Spiel entsprechend einem Ausmaß der Abschrägungen (22) gegeneinander beweglich sind, und erst weitere lösende Betätigung der Klemmschraube (18) zu einem gelösten Zustand und/oder zu einer Trennung von Klemmschraube (18) und Klemmmutter (20) von der Koppel (10) führt.

4. Koppel (10) nach einem der vorhergehenden Ansprüche, **dadurch gekennzeichnet, dass** Koppelstösselelement (12) oder Koppelstempelelement (14) eine Einlegeausnehmung (24) umfasst, bevorzugt das Koppelstösselelement (12), deren Inhalt, insbesondere Abstandsfolien, in einem verbundenen Zustand von Koppelstösselelement (12) und/oder Koppelstempelelement (14) zwischen diesen geklemmt ist und einen Abstand zwischen diesen und/oder eine Gesamtgröße (38) der Koppel (10) vergrößert.

5. Koppel (10) nach Anspruch 4, **dadurch gekennzeichnet, dass** Koppelstösselelement (12) und/oder Koppelstempelelement (14) eine Zugangsöffnung (26) umfassen, bevorzugt das Koppelstempelelement (14), durch die die Einlegeausnehmung (24) wenigstens im teilgelösten Zustand zugänglich ist.

6. Koppel (10) nach einem der vorhergehenden Ansprüche, **dadurch gekennzeichnet, dass** die Koppel (10) mindestens ein Anschlagelement (28) umfasst, welches im teilgelösten Zustand von Koppelstösselelement (12) und Koppelstempelelement (14) trennbar ist und in einem verbundenen Zustand durch und zwischen Koppelstösselelement (12) und Koppelstempelelement (14) geklemmt ist und einen Abstand zwischen diesen bestimmt und/oder mit bestimmt und/oder beeinflusst.

7. Koppel (10) nach Anspruch 6 in seinem Rückbezug auf Anspruch 4 oder 5, **dadurch gekennzeichnet, dass** das Anschlagelement (28) im verbundenen Zustand in Reihe geklemmt ist mit der Einlegeausnehmung (24), wobei bevorzugt das Anschlagelement (28) durch die Zugangsöffnung (26) im teilgelösten Zustand entnehmbar und durch ein weiteres Anschlagelement (28) ersetzbar ist.

8. Koppel (10) nach Anspruch 6 oder 7, **dadurch gekennzeichnet, dass** die Koppel (10) eine Fixierschraube (30) umfasst zum Fixieren und/oder Begrenzen einer Position des Anschlagelements (28) relativ zu Koppelstösselelement (12) und/oder Koppelstempelelement.

9. Koppel (10) nach einem der vorhergehenden Ansprüche, **dadurch gekennzeichnet, dass** Koppelstösselelement (12) und Koppelstempelelement (14) komplementär zueinander mindestens einen Führungsvorsprung (32) und eine Führungsnut (34) umfassen, bevorzugt jeweils mindestens zwei zueinander orthogonal orientierte, so dass Koppelstösselelement (12) und Koppelstempelelement (14) im teilgelösten Zustand bei der Bewegung zueinander geführt sind, bevorzugt so dass nur eine Bewegung entlang einer Richtung erfolgen kann, die einer Verbindung von einem Stempel zu einem Antriebsstössel entspricht, wenn die Koppel (10) in einem Werkzeug der Stanz- und Umformtechnik zum Verbinden des Stempels mit dem Antriebsstössel eingesetzt ist.

10. Koppel (10) nach einem der vorhergehenden Ansprüche, **dadurch gekennzeichnet, dass** Koppelstösselelement (12) und Koppelstempelelement (14) und/oder Stempel und Antriebsstössel gegeneinander durch mindestens eine Feder in den teilgelösten Zustand vorgespannt sind.

11. Koppel (10) nach einem der vorhergehenden Ansprüche, **dadurch gekennzeichnet, dass** Koppelstösselelement (12) und Koppelstempelelement (14) Kopplungsmittel (36) zur Verbindung mit Stössel und/oder Stempel umfassen.

12. Set umfassend mindestens eine Koppel (10) nach einem der vorhergehenden Ansprüche und mindestens ein Anschlagelement (28) entsprechend der Merkmale des Anspruchs 6, 7 und/oder 8.

13. Stanz- und/oder Umformmaschine umfassend mindestens einen Stempel und mindestens einen Antriebsstössel, wobei mindestens eine Koppel (10) nach einem der vorhergehenden Ansprüche zwischen dem mindestens einen Stempel und dem mindestens einen Antriebsstössel angeordnet ist und/oder wobei die Stanz- und/oder Umformmaschine mindestens ein Set nach Anspruch 12 umfasst.

14. Verfahren zum Verstellen eines Abstandes zwischen einem Stempel und einem Antriebsstössel unter Nutzung einer Koppel (10) nach einem der Ansprüche 1 bis 11 und/oder eines Sets nach Anspruch 12 und/oder einer Stanz- und/oder Umformmaschine nach Anspruch 13 umfassend wenigstens einen, bevorzugt mehrere und besonders bevorzugt alle der Schritte oder alle der Schritte bis auf c) und g):
a) Lösende Betätigung einer Klemmschraube (18) bis der teilgelöste Zustand erreicht ist;
b) Bewegen von Koppelstösselelement (12) und Koppelstempelelement (14) bis ein gewünschter Abstand zwischen Koppelstösselelement (12) und Koppelstempelelement (14) und/oder eine gewünschte Gesamtgröße (38) der Koppel (10) und/oder ein gewünschter Abstand zwischen Stempel und Antriebsstössel erreicht ist;
c) Lösende Betätigung einer Fixierschraube (30);
d) Trennen eines Anschlagelements von Koppelstösselelement (12) und/oder Koppelstempelelement, bevorzugt durch eine Zugangsöffnung (26);
e) Bereitstellen von Inhalt, insbesondere Abstandsfolien, in dem teilgelösten Zustand von solcher Menge, solchem Umfang, solcher Anzahl und/oder solcher Dicke in einer Einlegeausnehmung (24), wie dies einem gewünschten Abstand zwischen Koppelstösselelement (12) und Koppelstempelelement (14) und/oder einer gewünschten Gesamtgröße (38) der Koppel (10) und/oder einem gewünschten Abstand zwischen Stempel und Antriebsstößel entspricht;
f) Einbringen des Anschlagelements oder eines auf einen gewünschten Abstand ausgelegten Anschlagelements (28) in Koppelstösselelement (12) und/oder Koppelstempelelement, bevorzugt durch eine Zugangsöffnung;
g) Fixierende Betätigung einer Fixierschraube (30); und/oder
h) Fixierende Betätigung einer Klemmschraube (18),
wobei bevorzugt die Ausführung in alphabetischer Reihenfolge erfolgt.
